(19) Europäisches Patentamt
European Patent Office
Office européen des brevets

(11) EP 0 888 056 B1

(12) EUROPEAN PATENT SPECIFICATION

(45) Date of publication and mention of the grant of the patent:
**09.10.2002 Bulletin 2002/41**

(21) Application number: **97937044.2**

(22) Date of filing: **29.07.1997**

(51) Int Cl.[7]: **A01N 43/56**
// (A01N43/56, 47:36, 47:30, 43:76, 43:70, 43:40, 39:02, 37:40, 33:18)

(86) International application number:
**PCT/US97/13245**

(87) International publication number:
**WO 98/004134 (05.02.1998 Gazette 1998/05)**

# (54) HERBICIDAL MIXTURES

HERBIZIDE MISCHUNGEN

MELANGES HERBICIDES

(84) Designated Contracting States:
**AT BE CH DE DK ES FI FR GB GR IE IT LI LU NL PT SE**
Designated Extension States:
**LT LV RO SI**

(30) Priority: **30.07.1996 US 688473**

(43) Date of publication of application:
**07.01.1999 Bulletin 1999/01**

(73) Proprietor: **BASF AKTIENGESELLSCHAFT**
**67056 Ludwigshafen (DE)**

(72) Inventor: **BALTRUSCHAT, Helmut, Siegfried**
**D-55444 Schweppenhausen (DE)**

(74) Representative: **Langfinger, Klaus Dieter, Dr. et al**
**Director Patents & Licensing,**
**BASF Aktiengesellschaft ZDX/P-C6**
**67056 Ludwigshafen (DE)**

(56) References cited:
**EP-A- 0 272 533**
**EP-A- 0 693 490**
**WO-A-94/22833**
**US-A- 5 242 892**
**US-A- 5 453 414**

- **CHEMICAL ABSTRACTS, vol. 121, no. 9, 29 August 1994 Columbus, Ohio, US; abstract no. 102004, XP002046012 & JP 06 145 007 A (TOKUYAMA SODA) 24 May 1994**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

### BACKGROUND OF THE INVENTION

The present invention relates to an improvement in the efficacy of herbicidal 2,6-substituted pyridines by combination with a selected second herbicidal compound. The term "2,6-substituted pyridines" is being used herein for such pyridine derivatives which may or may not contain further substituents.

The herbicidal 2,6-disubstituted pyridines to be used according to the present invention are a group of compounds, disclosed in European Patent Applications EP 0 572 093 A, EP 0 692 474 A, EP 0 693 490 and International Application WO 94/22833, which display excellent herbicidal performance, in particular against broad-leaved weeds in cereal crops. However, the 2,6-disubstituted pyridines, when used as the sole active ingredient, do not always achieve effective control of the full spectrum of weed species encountered in commercial agronomic applications, in conjunction with reliable selectivity for the crop species. Such gaps in the spectrum of control can be overcome by co-treatment with another herbicide known to be effective against the relevant weed species. The combined use of certain herbicidal pyridines and in addition other herbicides has been described in International Patent Application WO 94/07368.

Surprisingly, it has now been found, that the combined herbicidal activity of compounds from the above mentioned 2,6-disubstituted pyridines with various partners against many broad-leaved weeds and annual grasses is much greater than expected when applied pre- or post-emergence and that this activity cannot be ascribed to an additive effect, but to a remarkable degree of synergism on many broad-leaved weed species and annual grasses, for example on Setaria viridis, Alopecurus myosuroides, Poa annua, Stellaria media, Lamium purpureum, Galium aparine, Veronica hederaefolia, Papaver rhoeas or Matricaria inodora (i.e. these combinations show a much higher level of activity than predicted from that of the individual compounds) which enables also a greater selectivity for the crop species.

A mixture of herbicides shows synergistic effect if the herbicidal activity of the mixture is larger than the sum of activities of the seperately applied compounds. The expected herbicidal activity for a given mixture of two herbicides can be calculated as follows (See Colby, S.R., "Calculating synergistic and antagonistic response of herbicide combinations". Weeds 15, pp 20-22 (1967):

$$WE = X + \frac{Y \times (110 - X)}{100}$$

wherein

X
: is the percentage of growth inhibition upon treatment with a herbicide 1 at a dose of p kg/ha compared with an untreated control (X=0 %)

Y
: is the percentage of growth inhibition treatment with a herbicide 2 at a dose of q kg/ha compared with an untreated control

WE
: is the herbicidal effect to be expected upon treatment (% of growth inhibition compared with untreated control) with a combination of herbicide 1 and 2 at a dose of p + q g/ha, respectively.

If the actual weed control (W) exceeds the expected (calculated) weed control (WE), the mixture displays a synergistic effect.

### SUMMARY OF THE INVENTION

The present invention incudes a herbicidal composition comprising a herbicidally acceptable carrier and/or surface active agent together with, as active ingredient, a mixture of:

(1) at least one 2,6-disubstituted pyridine selected from the compounds of general formulae I and II:

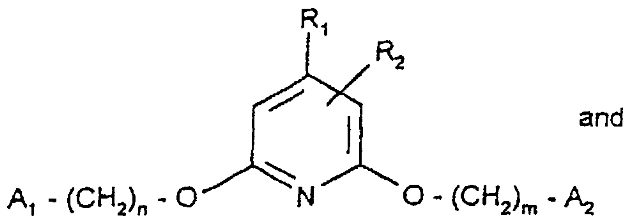

(I)

and

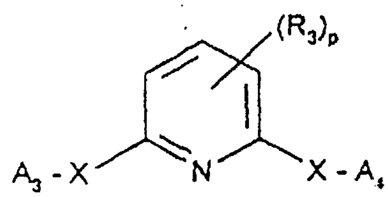

(II)

wherein
$A_1$ and $A_2$ independently represent an aryl group, if m is 1, $A_2$ may also represent a thienyl group; at least one of $A_1$ and $A_2$ being substituted by one or more of the same or different substituents selected from halogen atoms, alkyl groups, alkoxy groups, haloalkyl groups and haloalkoxy groups;

- $R_1$ represents a hydrogen atom or a cyano group or an alkyl, alkoxy, alkylthio or haloalkyl group having from 1 to 4 carbon atoms, and
- $R_2$ represents a hydrogen or halogen atom, provided that at least one of $R_1$ and $R_2$ represents a hydrogen atom;
- n and m independently represent 0 or 1;
- $A_3$ represents an optionally substituted 5 or 6 membered nitrogen containing heteroaromatic group;
- $A_4$ represents an optionally substituted 5 or 6 membered cyclic hydrocarbon, alkyl, alkenyl, alkynyl, aryl or aralkyl group or independently one of the meanings for $A_3$;
- $R_3$ represents a halogen atom or an alkyl, haloalkyl, alkoxy, alkylthio or dialkylamino group;
- X represents an oxygen or sulfur atom;
- p represents 0, 1 or 2.

(2) at least one additional herbicidal compound, which is active against broad-leaved weeds and/or annual grasses.

The additional compounds having herbicidal activities against broad-leaved weeds and/or annual grasses are preferably selected from

a) urea-type herbicide, such as chlortoluron, isoproturon, linuron or neburon,
b) a triazine-type herbicide, such as atrazine, cyanazine or simazine,
c) a hydroxybenzonitrile herbicide, such as bromoxynil or loxynil,
d) an aryloxyalkanoic acid herbicide, such as dichlorprop, 4-chloro-2-methylphenoxyacetic acid ("MCPA") or mecoprop,
e) a dinitroaniline herbicide, such as pendimethalin,
f) a sulfonylurea herbicide, such as amidosulfuron,
g) a pyridazine herbicide, such as pyridate,
h) a fluorene carboxylic acid herbicide, such as flurenol,
i) a pyridyloxyacetic acid herbicide, such as fluroxypyr,
j) a fenoxyfenoxypropionie acid herbicide, such as fenoxaprop, and
k) an oxyacetamide herbicide.

The present invention also includes a method for controlling undesirable plant species comprising application of at least one compound of group (1) and at least one compound of group (2), as defined above. In the method of this invention, these compounds may be applied separately or together, in herbicidally effective amounts.

## DETAILED DESCRIPTION OF THE PREFERRED EMBODIMENTS

Preferred embodiments of the composition and method of the present invention include those in which $A_1$ and/or $A_2$ are preferably phenyl, thienyl or pyrazol groups, independently substituted by one or more substituents selected from fluorine or chlorine atoms, or methyl, methoxy, trifluoromethyl or trifluoromethoxy groups.

Preferably, $R_1$ represents trifluoromethyl, methyrthio or methyl and $R_2$ a hydrogen atom, or $R_1$ represents a hydrogen atom and $R_2$ is a hydrogen or chlorine atom.

Further preferred embodiments include those in which $A_3$ is suitably pyridyl or pyrazolyl, and $A_4$ pyridyl, pyrazolyl, phenyl or benzyl. $A_3$ and $A_4$ may be the same or different, and are preferably substituted, e.g. by halogen atoms,

nitro, cyano, alkyl, alkoxy, alkylthio, aryl or haloalkyl groups wherein the alkyl moiety in each case preferably contains 1 to 6 carbon atoms.

Preferred compounds for use as 2,6-disubstituted pyridines according to the invention include the compounds of formulae III and IV:

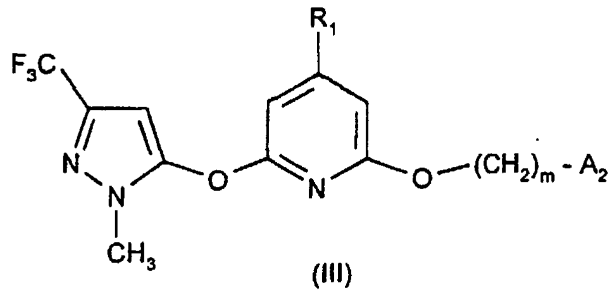

(III)

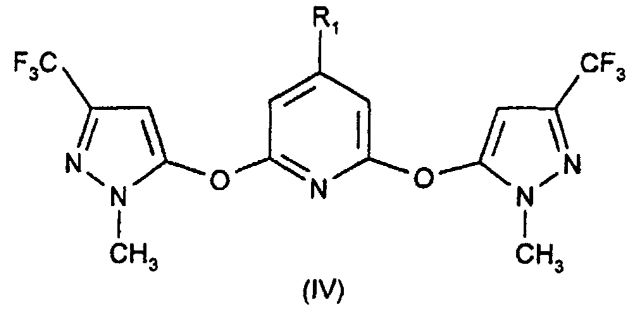

(IV)

wherein $A_2$ represents an aryl, preferably a phenyl group which may be substituted by one or more of the same or different substituents selected from halogen atoms, $C_1$-$C_4$ -alkyl, -alkoxy, -haloalkyl, -haloalkoxy groups, $R_1$ represents a hydrogen atom or a $C_1$ - $C_4$ - alkyl, -alkoxy, -alkylthio or -haloalkyl group, and m is 0, 1 or 2.

Particularly preferred are those compounds of formula III wherein $R_1$ is methyl, m is 1 and $A_2$ is phenyl or 4-fluorophenyl, and compounds of formula IV wherein $R_1$ is a hydrogen atom or a methyl group.

The pattern of persistence of the 2,6-substituted pyridine (abbreviated herein as "BAP") is such that the combined treatment according to the present invention can be attained either by the application of a prepared mixture as defined above, or by time separated application of separate formulations. Hence, in another preferred embodiment, the present invention provides a method for controlling the growth of weeds at a cereal crop locus which comprises applying to the locus a BAP as defined above and a second component which is selected from those listed above as group (1).

The treatment according to the invention may be used to control a broad spectrum of weed species in cereal crops, e.g., in wheat, barley, rice and maize, by pre- or post-emergence treatment, including both early and late post-emergence .The combined use decribed above offers both foliar and residual activity.

By the term "pre-emergence application" is meant application to the soil in which the weed seeds or seedlings are present before emergence of the weeds above the surface of the soil. By the term "post-emergence application" is meant application to the aerial or exposed portions of the weeds which have emerged above the surface of the soil. It will be appreciated that application according to the method may be from pre- to post-weed emergence, and from pre-crop emergence to post-crop emergence. By the term "foliar activity" is meant herbicidal activity obtained by application to the aerial or exposed portions of the weeds which have emerged above the surface of the soil. By the term "residual activity" is meant herbicidal activity obtained some time after application to the soil whereby seedlings present at the time of application or which germinate subsequent to application are controlled.

Weeds that may be controlled by the practice of the present invention include:

| | | |
|---|---|---|
| Veronica persica | Veronica hederaefolia | Stellaria media |
| Lamium purpureum | Lamium amplexicaule | Aphanes arvensis |
| Galium aparine | Alopecurus myosuroides | Matricaria inodora |

(continued)

| | | |
|---|---|---|
| Matricaria matricoides | Anthemis arvensis | Papaver rhoeas |
| Poa annua | Apera spica-venti | Phalaris paradoxa |
| Phalaris minor | Avena fatua | Lolium perenne |
| Bromus sterilis | Poa trivialis | Spergula arvensis |
| Cerastes holosteoides | Arenaria seryllifolia | Silene vulgaris |
| Legousia hybrida | Geranium dissectum | Montia perfoliata |
| Myosotis arvensis | Chenopodium alba | Polygonum aviculare |
| Polygonum lapathifolium | Polygonum convolvulus | Galeopsis tetrahit |
| Chrysantemum segetum | Centaurea cyanus | Viola arvensis |
| Senecia vulgaris | Cirsium arvense | Fumaria officinalis |
| Raphanus raphanistrum | Agrostis stolonifera | Atriplex patula |
| Capsella bursa-pastoris | Thlaspi arvense | Portulaca oleracea |
| Setaria viridis | Eleusine indica | Euphorbia helioscopia |

The application rate of the BAP component of this invention is usually in the range of 5 to 500 grams of active ingredient (g a.i.) per hectare, with rates between 7.5-100 g a.i./ha often achieving satisfactory control and selectivity. The optimal rate for a specific application will depend on the crop(s) under cultivation and the predominant species of infesting weed, and readily may be determined by established biological tests known to those skilled in the art.

The selection of the non-BAP active ingredient will likewise be dependent on the crop/weed situation to be treated, and will be readily identifiable by those skilled in this area. The application rate this active component is determined primarily by the chemical type of the component, since the intrinsic activity of different types of herbicide varies widely. For example, the activity of a triazine herbicide, such as cyanazine or simazine, can be almost tenfold greater than that of an urea herbicide such as chlortoluron or isoproturon. In general, the preferred application rate of this active ingredient is in the range of 100 to 2500 g a.i./ha, preferably 100-1500 g a.i./ha, for an urea herbicide; in the range of 7.5 to 100 g/ha, for a sulfonylurea herbicide; in the range of 75-400 g/ha for a hydroxybenzonitrile herbicide; in the range of 100 - 1200 g a.i./ha, for an aryloxyalkanoic acid herbicide; in the range of 250 to 2500 g/ha, for a dinitroaniline herbicide such as pendimethalin; in the range of 40 to 200 g/ha, for a pyridyloxyacetic acid herbicide such as fluroxypyr; in the range of 25 to 250 g/ha, for a fenoxyfenoxypropion acid herbicide; and in the range of 25 to 500 g/ha, for an oxyacetamide herbicide. The optimal rate for the chosen non-BAP component will, however, depend on the crop(s) under cultivation and the level of weed infestation, and can readily be determined by established biological tests. Naturally, with such a wide variation in application rate for the non-BAP component, the ratio of a BAP to a non-BAP component in the present invention will be determinded predominantly by the choice of the non-BAP component. The ratio (by weight) of the 2,6-disubstituted pyridine (1) to the additional herbicidal compound (2) isas a rule, from 10:1 to 1:200. The preferred ratio BAP : non-BAP may vary, e.g., from about 1 : 1 (Bromoxynil) to about 64 : 1 (Isoproturon).

The active compounds can be used in the form of a mixture of separate formulations, typically mixed with water prior to application (tank-mixtures), or as separate formulations applied individually within a certain time interval. Both active compounds can also be formulated together in a suitable ratio according to the present invention, together with usual carriers and/or additives known in the art.

A typical formulation containing one compound of group (1) and one compound of group (2) above may be composed as follows:

| Wettable Powder | |
|---|---|
| Compound C | 25 g |
| Isoproturon | 500 g |
| ligninsulfonate [1)] | 80 g |
| alkylnaphthalene sulphonate [2)] | 20 g |
| kaolin [3)] | to 1000 g |

[1)] e.g. Borresperse N (dispersing agent)
[2)] e.g. Nekal BX (dispersing agent)
[3)] e.g. China Clay GTY (filler/carrier)

Formulations of the present invention may be in any form known in the art, e.g., powders, granules, solutions,

emulsions, suspensions, and the like.

The following examples illustrate specific embodiments of the present invention; however, the invention is not limited to the embodiments so illustrated, but includes the entire scope of the appended claims.

## EXAMPLES:

General Method:

The trials are carried out under greenhouse conditions in pre- and post-emergence applications. The plant seeds are sown in pots containing a loamy sand soil (0.5 l). The herbicides are applied as single treatments, or in a combination comprising a BAP compound and a non-BAP compound as designated, before or after emergence of weeds and crop. The herbicidal performance is assessed as percent damage in comparison to the untreated control plants. The assessment is done 21 days after the treatment. Wheat and barley are treated at the 3-4 leaf stage, the broad-leaf weeds at the 2-4 leaf stage and annual grasses at the 2-3 leaf stage.

For the BAP component, compounds A to D are employed:

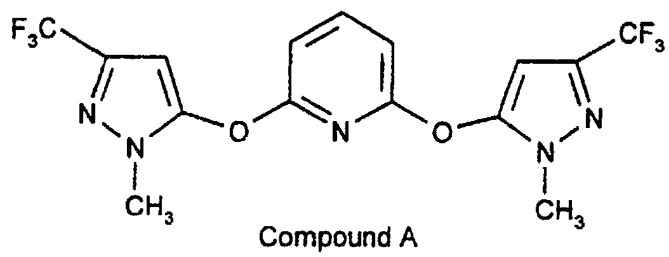

Compound A

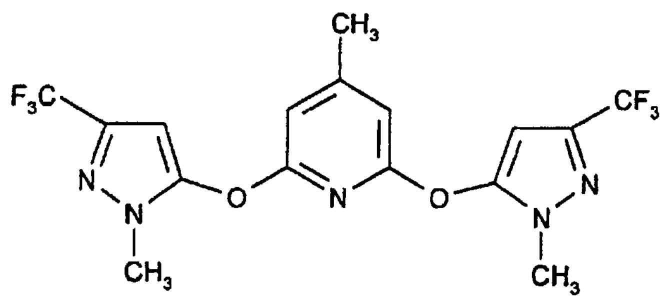

Compound B

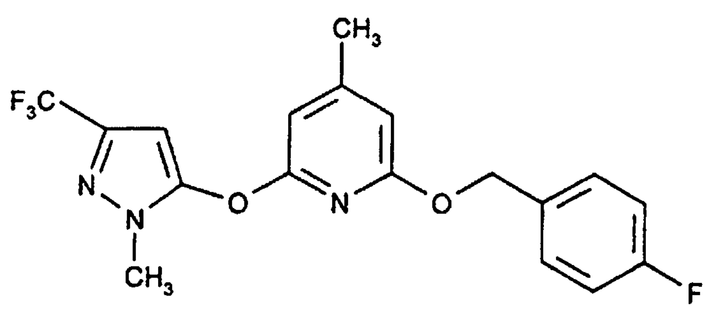

Compound C

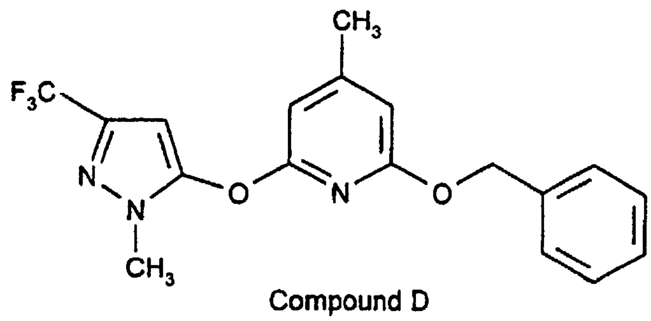

Compound D

The non-BAP component is identified in each example with application rates (and hence component ratios) chosen to be appropriate to the established activity level of that component.

The following abbreviations have been used in the tables:

WE: expected response by means of the Colby formula;
W: observed response
"CCPP-P": (R)-2-(4-chloro-2-methylphenoxy) proprionic acid.

The results of these experiments are tabulated as Examples 1 to 10, wherein all the results from a chosen "non-BAP component" are collected under the same Example number, different dosage rates/test species being recorded in the examples. From these results, it is clear that synergism exists between the BAP and the non-BAP compounds. Crop tolerance (wheat and barley) is excellent in all treatments.

**Example 1a**

**Herbicidal performance of the mixture Compound A + loxynilsalt (30 g a.i./ha + 60 g a.i./ha = mixture 1:2) against broad-leaved weeds in post-emergence application**

| weed species | Compound A 30 g a.i./ha | loxynil 60 g a.i./ha | Compound A + loxynil 30 g a.i./ha + 60 g a.i./ha | |
|---|---|---|---|---|
| | % Control | | WE | W |
| Galium aparine (1.whorl) | 80 | 40 | 88 | 100 |
| Galium aparine (2.whorl) | 57 | 5 | 59 | 94 |
| Matricaria inodora | 1 | 89 | 89 | 100 |

Expected control of Galium aparine (1.whorl), Galium aparine (2.whorl) and Matricaria inodora was 88, 59 and 89 %, resp., clearly demonstrating that the combination is synergistic.

**Example 1b**

**Herbicidal performance of the mixture Compound A + loxynilsalt (15 g a.i./ha + 60 g a.i./ha = mixture 1:4) against broad-leaved weeds in post-emergence application**

| weed species | Compound A 15 g a.i./ha | loxynil 60 g a.i./ha | Compound A + loxynil 15 g a.i./ha + 60 g a.i./ha | |
|---|---|---|---|---|
| | % Control | | WE | W |
| Matricaria inodora | 1 | 89 | 89 | 100 |

(continued)

| weed species | Compound A 15 g a.i./ha | Ioxynil 60 g a.i./ha | Compound A + Ioxynil 15 g a.i./ha + 60 g a.i./ha | |
|---|---|---|---|---|
| | % Control | | WE | W |
| Papaver rhoeas | 79 | 0 | 79 | 97 |
| Myosotis arvensis | 72 | 37 | 82 | 100 |

Expected control of Matricaria inodora, Papaver rhoes and Myosotis arvensis was 89, 79 and 82% resp., clearly demonstrating that the combinatuon is synergistic.

**Example 1c**

**Herbicidal performance of the mixture Compound B + Ioxynilsalt (30 g a.i./ha + 60 g a.i./ha = mixture 1:2) against broad-leaved weeds in post-emergence application**

| weed species | Compound B 30 g a.i./ha | Ioxynil 60 g a.i./ha | Compound B + Ioxynil 30 g a.i./ha + 60 g a.i./ha | |
|---|---|---|---|---|
| | % Control | | WE | W |
| Galium aparine (1.whorl) | 83 | 40 | 90 | 100 |
| Galium aparine (2.whorl) | 67 | 5 | 69 | 85 |

Expected control of Galium aparine (1.whorl) and Galium aparine (2.whorl) was 90 and 69 %, resp., clearly demonstrating that the combination is synergistic.

**Example 1d**

**Herbicidal performance of the mixture Compound B + Ioxynilsalt (15 g a.i./ha + 60 g a.i./ha = mixture 1:4) against broad-leaved weeds in post-emergence application**

| weed species | Compound B 15 9 a.i./ha | Ioxynil 60 g a.i./ha | Compound B + Ioxynil 15 g a.i./ha + 60 g a.i./ha | |
|---|---|---|---|---|
| | % Control | | WE | W |
| Galium aparine (1.whorl) | 80 | 40 | 88 | 100 |
| Galium aparine (2.whorl) | 60 | 5 | 62 | 82 |
| Matricaria inodora | 7 | 89 | 90 | 100 |

Expected control of Galium aparine (1.whorl), Galium aparine (2.whorl) and Matricaria inodora was 88, 62 and 90 %, resp., clearly demonstrating that the combination is synergistic.

**Example 2a**

**Herbicidal performance of the mixture Compound A + Bromoxynil Octanoate (60 g a.i./ha + 60 g a.i./ha = mixture 1:1) against broad-leaved weeds in post-emergence application**

| weed species | Compound A 60 g a.i./ha | Bromoxynil 60 g a.i./ha | Compound A + Bromoxynil 60 g a.i./ha + 60 g a.i./ha | |
|---|---|---|---|---|
| | % Control | | WE | W |
| Galium aparine (1.whorl) | 67 | 70 | 90 | 100 |
| Galium aparine (2.whorl) | 42 | 57 | 75 | 90 |
| Papaver rhoeas | 10 | 79 | 81 | 100 |

Expected control of Galium aparine (1.whorl), Galium aparine (2.whorl), Stellaria media and Papaver rhoeas was 90, 75 and 81 %, resp., clearly demonstrating that the combination is synergistic.

**Example 2b**

**Herbicidal performance of the mixture Compound A + Bromoxynil Octanoate (30 g a.i./ha + 60 g a.i./ha = mixture 1:2) against broad-leaved weeds in post-emergence application**

| weed species | Compound A 30 g a.i./ha | Bromoxynil 60 g a.i./ha | Compound A + Bromoxynil 30 g a.i./ha + 60 g a.i./ha | |
|---|---|---|---|---|
| | % Control | | WE | W |
| Galium aparine (1.whorl) | 57 | 70 | 87 | 92 |
| Galium aparine (2.whorl) | 32 | 57 | 71 | 82 |
| Lamium purpureum | 65 | 17 | 71 | 85 |
| Stellaria media | 45 | 0 | 45 | 69 |
| Papaver rhoeas | 9 | 79 | 81 | 100 |

Expected control of Galium aparine (1.whorl), Galium aparine (2.whorl), Lamium purpureum, Stellaria media and Papaver rhoeas was 87, 71, 71, 45 and 81 %, resp., clearly demonstrating that the combination is synergistic.

**Example 2c**

**Herbicidal performance of the mixture Compound A + Bromoxynil Octanoate (30 g a.i./ha + 120 g a.i./ha = mixture 1:4) against broad-leaved weeds in post-emergence application**

| weed species | Compound A 30 g a.i./ha | Bromoxynil 120 g a.i./ha | = Compound A + Bromoxynil 30 g a.i./ha + 120 g a.i./ha | |
|---|---|---|---|---|
| | % Control | | WE | W |
| Galium aparine (1.whorl) | 57 | 75 | 89 | 100 |
| Galium aparine (2.whorl) | 32 | 77 | 84 | 99 |
| Stellaria media | 65 | 57 | 85 | 90 |

Expected control of Galium aparine (1.whorl), Galium aparine (2.whorl) and Stellaria media was 89, 84 and 85 %, resp., clearly demonstrating that the combination is synergistic.

**Example 2d**

**Herbicidal performance of the mixture Compound B + Bromoxynil Octanoate (30 g a.i./ha + 60 g a.i./ha = mixture 1:2) against broad-leaved weeds in post-emergence application**

| weed species | Compound B 30 g a.i./ha | Bromoxynil 60 g a.i./ha | Compound B + Bromoxynil 30 g a.i./ha + 60 g a.j./ha | |
|---|---|---|---|---|
| | % Control | | WE | W |
| Galium aparine (2.whorl) | 65 | 57 | 85 | 100 |
| Stellaria media | 62 | 0 | 62 | 84 |
| Papaver rhoeas | 17 | 79 | 83 | 100 |

Expected control of Galium aparine (2.whorl), Stellaria media and Papaver rhoeas was 85, 62 and 83 %, resp., clearly demonstrating that the combination is synergistic.

**Example 2e**

**Herbicidal performance of the mixture Compound B + Bromoxynil Octanoate (15 g a.i./ha + 60 g a.i./ha = mixture 1:4) against broad-leaved weeds in post-emergence application**

| weed species | Compound B 15 g a.i./ha | Bromoxynil 60 g a.i./ha | Compound B + Bromoxynil 15 g a.i./ha + 60 g a.i./ha | |
|---|---|---|---|---|
| | % Control | | WE | W |
| Galium aparine (1.whorl) | 67 | 70 | 90 | 100 |
| Stellaria media | 47 | 0 | 47 | 83 |
| Papaver rhoeas | 2 | 79 | 79 | 100 |

Expected control of Galium aparine (1.whorl), Stellaria media and Papaver rhoeas was 90, 47 and 79 %, resp., clearly demonstrating that the combination is synergistic.

**Example 2f**

**Herbicidal performance of the mixture Compound B + Bromoxynil Octanoate (15 g a.i./ha + 120 g a.i./ha = mixture 1:8) against broad-leaved weeds in post-emergence application**

| weed species | Compound B 15 g a.i./ha | Bromoxynil 120 g a.i./ha | Compound B + Bromoxynil 15 g a.i./ha + 120 g a.i./ha | |
|---|---|---|---|---|
| | % Control | | WE | W |
| Galium aparine (1.whorl) | 67 | 75 | 92 | 100 |
| Galium aparine (2.whorl) | 45 | 77 | 87 | 98 |
| Stellaria media | 47 | 0 | 47 | 75 |

Expected control of Galium aparine (1.whorl), Galium aparine (2.whorl) and Stellaria media was 92, 87 and 47 %, resp., clearly demonstrating that the combination is synergistic.

**Example 3a**

**Herbicidal performance of the mixture Compound A + CMPP-P (30 g a.i./ha + 480 g a.i./ha = mixture 1:16) against broad-leaved weeds** in **post-emergence application**

| weed species | Compound A 30 g a.i./ha | CMPP-P 480 g a.i./ha | Compound A + CMPP-P 30 g a.i./ha + 480 g a.i./ha | |
|---|---|---|---|---|
| | % Control | | WE | W |
| Papaver rhoeas | 32 | 47 | 64 | 87 |
| Lamium purpureum | 62 | 67 | 87 | 99 |
| Polygonum convolvulus | 60 | 40 | 76 | 99 |

Expected control of Papaver rhoeas, Lamium purpureum and Polygonum convolvulus was 64, 87 and 76 %, resp., clearly demonstrating that the combination is synergistic.

**Example 4a**

**Herbicidal performance of the mixture Compound A + Amidosulfuron (50 g a.i./ha + 15 g a.i./ha = mixture 3.3 : 1) against broad-leaved weeds in post-emergence application**

| weed species | Compound A 50 g a.i./ha | Amidosulfuron 15 g a.i./ha | Compound A + Amidosulfuron 50 g a.i./ha + 15 g a.i./ha | |
|---|---|---|---|---|
| | % Control | | WE | W |
| Galium aparine (1.whorl) | 50 | 40 | 70 | 82 |
| Galium aparine (2.whorl) | 30 | 20 | 44 | 97 |

Expected control of Galium aparine (1.whorl) and Galium aparine (2.whorl) was 70 and 44 %, resp., clearly demonstrating that the combination is synergistic.

**Example 4b**

**Herbicidal performance of the mixture Compound B + Amidosulfuron (7.5 g a.i./ha + 30 g a.i./ha = mixture 1: 4) against broad-leaved weeds in post-emergence application**

| weed species | Compound B 7.5 g a.i./ha 30 | Amidosulfuron 30 g a.i./ha | Compound B + Amidosulfuron 7.5 g a.i./ha + 30 g a.i./ha | |
|---|---|---|---|---|
| | % Control | | WE | W |
| Veronica persica | 65 | 0 | 65 | 96 |
| Stellaria media | 25 | 50 | 63 | 87 |
| Papaver rhoeas | 7 | 15 | 21 | 65 |

(continued)

| weed species | Compound B 7.5 g a.i./ha 30 | Amidosulfuron 30 g a.i./ha | Compound B + Amidosulfuron 7.5 g a.i./ha + 30 g a.i./ha | |
|---|---|---|---|---|
| | % Control | | WE | W |
| Lamium purpureum | 70 | 0 | 70 | 96 |

Expected control of Veronica persica, Stellaria media, Papaver rhoeas and Lamium purpureum was 65, 63, 21 and 70 %, resp., clearly demonstrating that the combination is synergistic.

**Example 5a**

**Herbicidal performance of the mixture Compound B + Fluroxypyr (30 g a.i./ha + 90 g a.i./ha = mixture 1:3) against broad-leaved weeds in post-emergence application**

| weed species | Compound B 30 g a.i./ha | Fluroxypyr 90 g a.i./ha | Compound B + Fluroxypyr 30 g a.i./ha + 90 g a.i./ha | |
|---|---|---|---|---|
| | % Control | | WE | W |
| Matricaria inodora | 22 | 45 | 57 | 95 |
| Papaver rhoeas | 80 | 0 | 80 | 92 |
| Polygonum convolvulus | 15 | 45 | 53 | 80 |

Expected control of Matricaria inodora, Papaver rhoeas and Polygonum convolvulus was 57, 80 and 53 %, resp., clearly demonstrating that the combination is synergistic.

**Example 5b**

**Herbicidal performance of the mixture Compound B + Fluroxypyr (15 g a.i./ha + 120 g a.i./ha = mixture 1:8) against broad-leaved weeds in post-emergence application**

| weed species | Compound B 15 g a.i./ha | Fluroxypyr 120 g a.i./ha | Compound B + Fluroxypyr 15 g a.i./ha + 120 g a.i./ha | |
|---|---|---|---|---|
| | % Control | | WE | W |
| Stellaria media | 45 | 67 | 82 | 100 |
| Veronica persica | 77 | 52 | 89 | 97 |
| Polygonum lapathifolium | 17 | 80 | 83 | 98 |

Expected control of Stellaria media, Veronica persica and Polygonum lapathifolium was 82, 89 and 83 %, resp., clearly demonstrating that the combination is synergistic.

**Example 6a**

**Herbicidal performance of the mixture Compound B + Cyanazine (30 g a.i./ha + 120 g a.i./ha = mixture 1:4) against broad-leaved weeds in post-emergence application**

| weed species | Compound B 30 g a.i./ha | Cyanazine 120 g a.i./ha | Compound B + Cyanazine 30 g a.i./ha + 120 g a.i./ha | |
|---|---|---|---|---|
| | % Control | | WE | W |
| Galium aparine (1.whorl) | 52 | 5 | 54 | 86 |
| Galium aparine (2.whorl) | 45 | 0 | 45 | 72 |
| Galium aparine (3.whorl) | 40 | 0 | 40 | 75 |
| Stellaria media | 42 | 61 | 77 | 100 |
| Matricaria inodora | 22 | 52 | 63 | 100 |
| Papaver rhoeas | 80 | 0 | 80 | 100 |
| Polygonum convolvulus | 7 | 60 | 63 | 100 |

Expected control of Galium aparine (1.whorl), Galium aparine (2.whorl), Galium aparine (3.whorl), Stellaria media, Matricaria inodora, Papaver rhoeas and Polygonum convolvulus was 54, 45, 40, 77, 63, 80 and 63 %, resp., clearly demonstrating that the combination is synergistic.

**Example 6b**

**Herbicidal performance of the mixture Compound B + Cyanazine (15 g a.i./ha + 120 g a.i./ha = mixture 1:8) against broad-leaved weeds in post-emergence application**

| weed species | Compound B 15 g a.i./ha | Cyanazine 120 g a.i./ha | Compound B + Cyanazine 15 g a.i./ha + 120 g a.i./ha | |
|---|---|---|---|---|
| | % Control | | WE | W |
| Stellaria media | 27 | 61 | 72 | 100 |
| Matricaria inodora | 20 | 52 | 62 | 100 |
| Polygonum convolvulus | 7 | 60 | 63 | 97 |

Expected control of Stellaria media, Matricaria inodora and Polygonum convolvulus was 72, 62 and 63 %, resp., clearly demonstrated that the combination is synergstic.

**Example 6c**

**Herbicidal performance of the mixture Compound B + Cyanazine (30 g a.i./ha + 240 g a.i./ha = mixture 1:8) against broad-leaved weeds in post-emergence application**

| weed species | Compound B 30 g a.i./ha | Cyanazine 240 g a.i./ha | Compound B + Cyanazine 30 g a.i./ha + 240 g a.i./ha | |
|---|---|---|---|---|
| | % Control | | WE | W |
| Galium aparine (1.whorl) | 52 | 10 | 57 | 92 |

(continued)

| weed species | Compound B 30 g a.i./ha | Cyanazine 240 g a.i./ha | Compound B + Cyanazine 30 g a.i./ha + 240 g a.i./ha | |
|---|---|---|---|---|
| | % Control | | WE | W |
| Galium aparine (2.whorl) | 45 | 10 | 51 | 95 |
| Galium aparine (3.whorl) | 40 | 5 | 43 | 81 |
| Stellaria media | 42 | 72 | 84 | 100 |
| Matricaria inodora | 22 | 85 | 88 | 100 |
| Papaver rhoeas | 80 | 0 | 80 | 100 |

Expected control of Galium aparine (1.whorl), Galium aparine (2.whorl), Galium aparine (3.whorl), Stellaria media, Matricaria inodora and Papaver rhoeas was 57, 51, 43, 84, 88 and 80 %, resp., clearly demonstrating that the combination is synergistic.

**Example 6d**

**Herbicidal performance of the mixture Compound B + Cyanazine (15 g a.i./ha + 240 g a.i./ha = mixture 1:16) against broad-leaved weeds in post-emergence application**

| weed species | Compound B 15 g a.i./ha | Cyanazine 240 g a.i./ha | Compound B + Cyanazine 15 g a.i./ha + 240 g a.i./ha | |
|---|---|---|---|---|
| | % Control | | WE | W |
| Galium aparine (1.whorl) | 40 | 10 | 46 | 85 |
| Galium aparine (2.whorl) | 37 | 10 | 43 | 77 |
| Galium aparine (3.whorl) | 40 | 5 | 43 | 60 |
| Stellaria media | 27 | 72 | 80 | 100 |
| Matricaria inodora | 20 | 85 | 88 | 100 |
| Papaver rhoeas | 60 | 0 | 60 | 87 |

Expected control of Galium aparine (1.whorl), Galium aparine (2.whorl), Galium aparine (3.whorl), Stellaria media, Matricaria inodora and Papaver rhoeas was 46, 43, 43, 80, 88 and 60 %, resp., clearly demonstrating that the combination is synergistic.

**Example 7a**

**Herbicidal performance of the mixture Compound C + Isoproturon (50 g a.i./ha + 150 g a.i./ha = mixture 1:3) against grasses in post-emergence application**

| grass | Compound C 50 g a.i./ha | Isoproturon 150 g a.i./ha | Compound C + Isoproturon 50 g a.i./ha + 150 g a.i./ha | |
|---|---|---|---|---|
| | % control | | WE | W |
| Alopecurus myosuroides | 88 | 30 | 91 | 100 |
| Setaria viridis | 75 | 58 | 89 | 100 |
| Lolium perenne | 78 | 10 | 80 | 100 |

Expected control of Alopecurus myosuroides, Setaria viridis and Lolium perenne was 91, 89 and 80 %, resp., clearly demonstrated that the combination is synergistic.

**Example 7b**

**Herbicidal performance of the mixture Compound C + Isoproturon (25 g a.i./ha + 150 g a.i./ha = mixture 1:6) against grasses in post-emergence application**

| grass | Compound C 25 g a.i./ha | Isoproturon 150 g a.i./ha | Compound C + Isoproturon 25 g a.i./ha + 150 g a.i./ha | |
|---|---|---|---|---|
| | % control | | WE | W |
| Alopecurus myosuroides | 83 | 30 | 88 | 100 |
| Setaria viridis | 55 | 58 | 81 | 100 |
| Lolium perenne | 65 | 10 | 69 | 94 |

Expected control of Alopecurus myosuroides, Setaria viridis and Lolium perenne was 88, 81 and 69 %, resp., clearly demonstrating that the combination is synergistic.

**Example 7c**

**Herbicidal performance of the mixture Compound C + Isoproturon (12.5 g a.i./ha + 150 g a.i./ha = mixture 1:12) against grasses in post-emergence application**

| grass | Compound C 12.5 g a.i./ha | Isoproturon 150 g a.i./ha | Compound C + Isoproturon 12.5 g a.i./ha + 150 g a.i./ha | |
|---|---|---|---|---|
| | % control | | WE | W |
| Alopecurus myosuroides | 65 | 30 | 76 | 88 |
| Setaria viridis | 30 | 58 | 70 | 94 |
| Lolium perenne | 38 | 10 | 44 | 91 |
| Poa annua | 75 | 65 | 91 | 99 |

Expected control of Alopecurus myosuroides, Setaria viridis, Lolium perenne and Poa annua was76, 70, 44 and 91 %, resp., clearly demonstrating that the combination is synergistic.

**Example 7d**

**Herbicidal performance of the mixture Compound C + Isoproturon (25 g a.i./ha + 300 g a.i./ha = mixture 1:12) against grasses in post-emergence application**

| grass | Compound C 25 g a.i./ha | Isoproturon 300 g a.i./ha | Compound C + Isoproturon 25 g a.i./ha + 300 g a.i./ha | |
|---|---|---|---|---|
| | % control | | WE | W |
| Alopecurus myosuroides | 83 | 73 | 95 | 100 |
| Lolium perenne | 65 | 40 | 79 | 98 |

Expected control of Alopecurus mysuroides and Lolium perenne was 95 and 79 %, reps., clearly demonstrated that he combination is synergistic.

**Example 7e**

**Herbicidal performance of the mixture Compound C + Isoproturon (12.5 g a.i./ha + 300 g a.i./ha = mixture 1:24) against grasses in post-emergence application**

| grass | Compound C 12.5 g a.i./ha | Isoproturon 300 g a.i./ha | Compound C + Isoproturon 12.5 g a.i./ha + 300 g a.i./ha | |
|---|---|---|---|---|
| | % control | | WE | W |
| Alopecurus myosuroides | 65 | 73 | 90 | 99 |
| Lolium perenne | 38 | 40 | 63 | 91 |
| Poa annua | 75 | 83 | 96 | 100 |

Expected control of Alopecurus myosuroides, Lolium perenne and Poa annua was 90, 63 and 96 %, resp., clearly demonstrating that the combination is synergistic.

**Example 7f**

**Herbicidal performance of the mixture Compound A + Isoproturon (30 g a.i./ha + 1920 g a.i./ha = mixture 1:64) against broad-leaved weeds in post-emergence application**

| weed species | Compound A 30 g a.i./ha | Isoproturon 1920 g a.i./ha | Compound A + Isoproturon 30 g a.i./ha + 1920 g a.i./ha | |
|---|---|---|---|---|
| | % Control | | WE | W |
| Veronica persica | 81 | 0 | 81 | 97 |
| Lamium purpureum | 35 | 3 | 37 | 97 |
| Myosotis arvensis | 57 | 25 | 68 | 99 |
| Viola arvensis | 75 | 65 | 91 | 100 |
| Polygonum convolvulus | 5 | 4 | 9 | 80 |
| Galium aparine (2.whorl) | 75 | 0 | 75 | 90 |

Expected control of Veronica persica, Lamium purpureum, Myosotis arvensis, Viola arvensis, Polygonum convolvulus and Galium aparine (2.whorl) was 81, 37, 68, 91, 9 and 75% resp., clearly demonstrating that the combination is synergistic.

**Example 7g**

**Herbicidal performance of the mixture Compound D + Isoproturon (15 g a.i./ha + 300 g a.i./ha = mixture 1:20) against Alopecurus myosuroides in pre-emergence application**

| weed species | Compound D 15 g a.i./ha | Isoproturon 120 g a.i./ha | Compound D + Isoproturon 15 g a.i./ha + 120 g a.i./ha | |
|---|---|---|---|---|
| | % Control | | WE | W |
| Alopecurus myosuroides | 60 | 75 | 90 | 99 |

Expected control of Alopecurus myosuroides was 90 %, resp., clearly demonstrating that the combination is synergistic.

**Example 8a**

**Herbicidal performance of the mixture Compound D + Pendimethalin (15 g a.i./ha + 450 g a.i./ha = mixture 1:30) against Alopecurus myosuroides in pre-emergence application**

| weed species | Compound D 15 g a.i./ha | Pendimethalin 450 g a.i./ha | Compound D + Pendimethalin 15 g a.i./ha + 450 g a.i./ha | |
|---|---|---|---|---|
| | % Control | | WE | W |
| Alopecurus myosuroides | 57 | 35 | 72 | 90 |

Expected control of Alopecurus myosuroides was 72 %, resp., clearly demonstrating that the combination is synergistic.

**Example 8b**

**Herbicidal performance of the mixture Compound D + Pendimethalin (15 g a.i./ha + 900 g a.i./ha = mixture 1:60) against Alopecurus myosuroides in pre-emergence application**

| weed species | Compound D 15 g a.i./ha | Pendimethalin 900 g a.i./ha | Compound D + Pendimethalin 15 g a.i./ha + 900 g a.i./ha | |
|---|---|---|---|---|
| | % Control | | WE | W |
| Alopecurus myosuroides | 57 55 81 | | | 96 |

Expected control of Alopecurus myosuroides was 81 %, resp., clearly demonstrating that the combination is synergistic

**Example 9a**

**Herbicidal performance of the mixture Compound C + Fenoxaprop (12.5 g a.i./ha + 15 g a.i./ha = mixture 1:1,2) against Setaria viridis in post-emergence application**

| weed species | Compound C 12.5 g a.i./ha | Fenoxaprop 15 g a.i./ha | Compound C + Fenoxaprop 12.5 g a.i./ha + 15 g a.i./ha | |
|---|---|---|---|---|
| | % Control | | WE | W |
| Setaria viridis | 30 62 | | 73 | 94 |

Expected control of Setaria viridis was 73 %, resp., clearly demonstrating that the combination is synergistic.

**Example 9b**

**Herbicidal performance of the mixture Compound C + Fenoxaprop (12.5 g a.i./ha + 30 g a.i./ha = mixture 1:2.4) against Setaria viridis in post-emergence application**

| weed species | Compound C 12.5 g a.i./ha | Fenoxaprop 30 g a.i./ha | Compound C + Fenoxaprop 12.5 g a.i./ha + 30 g a.i./ha | |
|---|---|---|---|---|
| | % Control | | WE | W |
| Setaria viridis | 30 | 72 | 80 | 93 |

Expected control of Setaria viridis was 80 %, resp., clearly demonstrating that the combination is synergistic.

**Example 9c**

**Herbicidal performance of the mixture Compound C + Fenoxaprop (12.5 g a.i./ha + 60 g a.i./ha = mixture 1:4.8) against Setaria viridis in post-emergence application**

| weed species | Compound C 12.5 g a.i./ha | Fenoxaprop 60 g a.i./ha | Compound C + Fenoxaprop 12.5 g a.i./ha + 60 g a.i./ha | |
|---|---|---|---|---|
| | % Control | | WE | W |
| Setaria viridis | 30 | 77 | 84 | 100 |

Expected control of Setaria viridis was 84 %, resp., clearly demonstrating that the combination is synergistic.

## Claims

**1.** A herbicidal composition comprising a herbicidally acceptable carrier and/or surface active agent and, as active ingredient, a mixture of

(1) at least one 2,6-disubstituted pyridine selected from the compounds of the general formulae I and II:

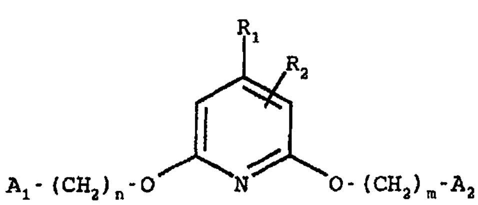

(I)

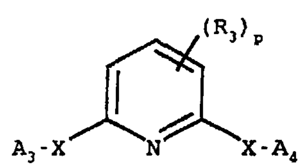

(II)

wherein

$A_1$ and $A_2$ independently represent an aryl group, if m is 1, $A_2$ may also represent a thienyl group; at least one of $A_1$ or $A_2$ being substituted by one or more of the same or different substituents selected from halogen atoms, alkyl groups, alkoxy groups, haloalkyl groups and haloalkoxy groups;

$R_1$ represents a hydrogen atom or a cyano group or an alkyl, alkoxy, alkylthio or haloalkyl group

having 1 to 4 carbon atoms;

$R_2$ represents a hydrogen or halogen atom, provided that at least one of $R_1$ and $R_2$ represents a hydrogen atom;

n and m independently represent 0 or 1;

$A_3$ represent an optionally substituted 5 or 6 membered nitrogen containing heteroaromatic group;

$A_4$ represent an optionally substituted 5 or 6 membered cyclic hydrocarbon, alkyl, alkenyl, alkynyl, aryl or aralkyl group or independently one of the meanings for $A_3$;

$R_3$ represents a halogen atom or an alkyl, haloalkyl, alkoxy, alkylthio or dialkylamino group,

X represents an oxygen or sulfur atom;

p represents 0, 1 or 2.

and

(2) at least one additional herbicidal compound, which is active against broadleaved weeds and/or annual grasses.

**2.** A herbicidal composition according to claim 1 wherein the 2,6-disubstituted pyridine is a compound of general formula I.

**3.** A herbicidal composition according to claim 1 wherein the 2,6- disubstituted pyridine is a compound of general formula II.

**4.** A herbicidal composition according to any of the preceding claims, wherein said additional herbicidal compound (2) is selected from

a) an urea-type herbicide,
b) a triazine-type herbicide,
c) a hydroxybenzonitrile herbicide,
d) an aryloxyalkanoic acid herbicide,
e) a dinitroaniline herbicide,
f) a sulfonylurea herbicide,
g) a pyridazine herbicide,
h) a fluorene carboxylic acid herbicide,
i) a pyridyloxyacetic acid type herbicide,
j) a fenoxyfenoxypropionic acid herbicide,
k) an oxyacetamide herbicide.

**5.** A composition as claimed in claim 4 wherein said additional herbicidal compound is selected from the group consisting of chlortoluron, isoproturon, linuron, neburon, atrazine, cyanazine, simazine, bromoxynil, ioxynil, dichloroprop, MCPA, mecoprop, pendimethalin, and amidosulfuron, pyridate, flurenol, fluroxypyr, fenoxaprop.

**6.** A composition as claimed in any of the preceding claims, wherein

$A_1$ and/or $A_2$ are phenyl, thienyl or pyrazolyl groups, independently substituted by one or more substituents selected from fluorine or chlorine atoms, methyl, methoxy, trifluoromethyl or trifluoromethoxy groups;

$R_1$ represents trifluoromethyl, methylthio or methyl and $R_2$ a hydrogen atom;

or

$R_1$ represents a hydrogen atom and $R_2$ is a hdrogen or chlorine atom;

$A_3$ is a pyridyl or pyrazolyl and $A_4$ pyridyl, pyrazolyl, phenyl or benzyl and may be the same if both represent a pyridyl or pyrazolyl; and are unsubstituted or substituted independently by halogen atoms, nitro, cyano, alkyl, alkoxy, alkylthio, aryl or haloalkyl groups wherein the alkyl moiety contains 1 to 6 carbon atoms.

**7.** A composition as claimed in any of the preceding claims, wherein the compounds of group

(1) are selected from compounds of formulae III and IV:

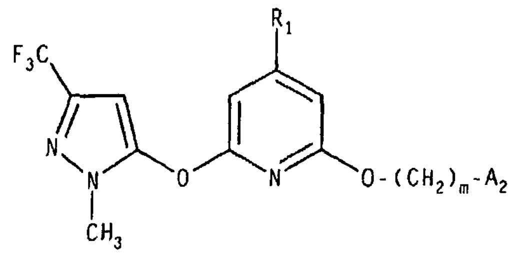

(III)

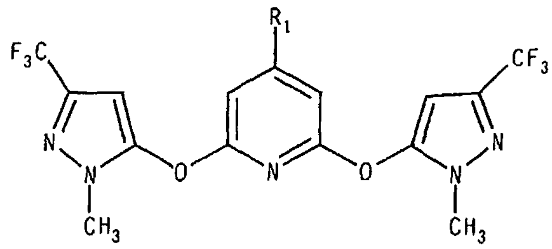

(IV)

wherein $A_2$ represents an aryl group which may be substituted by one or more of the same or different substituents selected from halogen atoms, $C_1$-$C_4$-alkyl, -alkoxy, -haloalkyl, -haloalkoxy groups, $R_1$ represents a hydrogen atom or a $C_1$-$C_4$-alkyl, -alkoxy, -alkylthio or -haloalkyl group and m is 0, 1 or else 2.

**8.** A composition as claimed in claim 7 , wherein in the compounds of formula III $R_1$ is methyl, m is 1 and $A_2$ is phenyl or 4-fluorophenyl.

**9.** A composition as claimed in claim 7, wherein in the compounds of formula IV $R_1$ is a hydrogen atom or a methyl group.

**10.** A composition as claimed in any of the preceding claims, containing a compound represented by one of the formulae A to D:

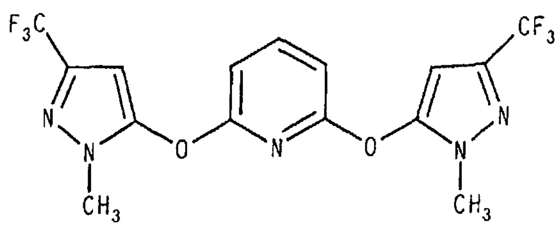

compound A

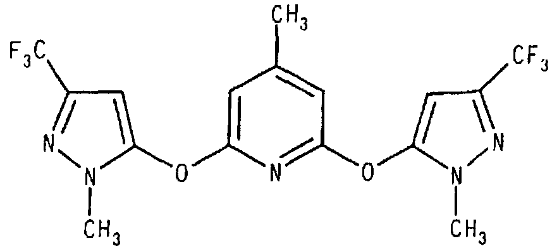

compound B

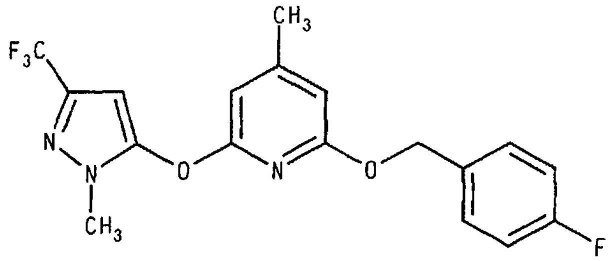

compound C

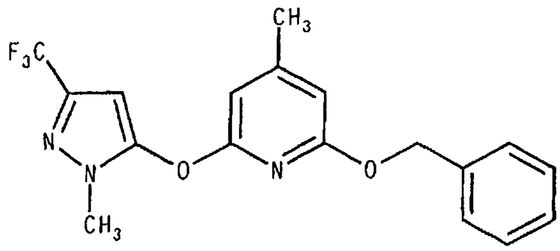

compound D

**11.** A composition as claimed in any of the preceding claims wherein the ratio (by weight) of the 2,6-disubstituted pyridine to the additional herbicidal compound (2) is from 10:1 to 1:200.

**12.** A method of controlling the growth of weeds at a locus which comprises applying to the locus an effective amount of both a compound of group (1) and a compound of group (2) as defined in any of the preceding claims.

**13.** A method according to claim 12, wherein said compounds are applied together in a single formulation.

**14.** A method according to claim 12, wherein said compounds are applied in separate formulations.

**15.** A method for controlling the growth of weeds in cereal crops comprising applying thereto an effective amount of a composition according to any of the preceding claims.

**Patentansprüche**

**1.** Herbizidzusammensetzung enthaltend einen herbizidbrauchbaren Träger und/oder oberflächenaktive Substanz, und als Wirkstoff, einer Mischung aus

(1) mindestens einem 2,6-disubstituiertem Pyridin aus der Gruppe der Verbindungen der allgemeinen Formeln I und II:

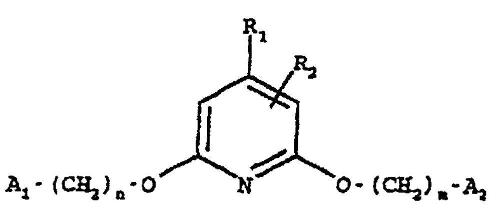

(I)

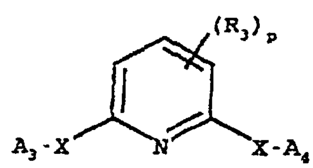

(II)

,

worin
$A_1$ und $A_2$ unabhängig voneinander eine Arylgruppe bedeuten; ist m 1, so kann $A_2$ auch eine Thienylgruppe

bedeuten; wobei mindestens eine der Gruppen $A_1$ bzw. $A_2$ durch einen oder mehrere gleiche oder verschiedene Substituenten aus der Gruppe Halogenatome, Alkylgruppen, Alkoxygruppen, Halogenalkylgruppen und Halogenalkoxygruppen substituiert ist;

$R_1$ ein Wasserstoffatom oder eine Cyangruppe oder eine Alkyl-, Alkoxy-, Alkylthio- oder Halogenalkylgruppe mit 1 bis 4 Kohlenstoffatomen bedeutet;

$R_2$ ein Wasserstoff- oder Halogenatom bedeutet, unter der Voraussetzung, daß mindestens eine der Gruppen $R_1$ und $R_2$ ein Wasserstoffatom bedeutet;

n und m unabhängig voneinander 0 oder 1 bedeuten;

$A_3$ eine gegebenenfalls substituierte 5- oder 6-gliedrige stickstoffhaltige heteroaromatische Gruppe bedeutet;

$A_4$ eine gegebenenfalls substituierte 5- oder 6-gliedrige cyclische Kohlenwasserstoff-, Alkyl-, Alkenyl-, Alkinyl-, Aryl- oder Aralkylgruppe bedeutet oder unabhängig eine der Bedeutungen von $A_3$ aufweist;

$R_3$ ein Halogenatom oder eine Alkyl-, Halogen- alkyl-, Alkoxy-, Alkylthio- oder Dialkylaminogruppe bedeutet,

X ein Sauerstoff- oder Schwefelatom bedeutet;

p 0, 1 oder 2 bedeutet;

und

(2) mindestens einer weiteren herbiziden Verbindung, die gegen zweikeimblättrige Unkräuter und/oder einjährige Gräser wirksam ist.

**2.** Herbizidzusammensetzung nach Anspruch 1, wobei es sich bei dem 2,6-disubstituierten Pyridin um eine Verbindung der allgemeinen Formel I handelt.

**3.** Herbizidzusammensetzung nach Anspruch 1, wobei es sich bei dem 2,6-disubstituierten Pyridin um eine Verbindung der allgemeinen Formel II handelt.

**4.** Herbizidzusammensetzung nach einem der vorhergehenden Ansprüche, wobei die zusätzliche herbizide Verbindung (2) aus der folgenden Gruppe ausgewählt ist:

a) einem Herbizid des Harnstofftyps,
b) einem Herbizid des Triazintyps,
c) einem Hydroxybenzonitril-Herbizid,
d) einem Aryloxyalkansäure-Herbizid,
e) einem Dinitroanilin-Herbizid,
f) einem Sulfonylharnstoff-Herbizid,
g) einem Pyridazin-Herbizid,
h) einem Fluorcarbonsäure-Herbizid,
i) einem Herbizid des Pyridyloxyessigsäuretyps,
j) einem Phenoxyphenoxypropionsäure-Herbizid,
k) einem Oxyacetamid-Herbizid.

**5.** Zusammensetzung nach Anspruch 4, wobei die zusätzliche herbizide Verbindung aus der Gruppe Chlortoluron, Isoproturon, Linuron, Neburon, Atrazin, Cyanazin, Simazin, Bromoxynil, Ioxynil, Dichlorprop, MCPA, Mecoprop, Pendimethalin und Amidosulfuron, Pyridate, Flurenol, Fluroxypyr sowie Fenoxaprop ausgewählt ist.

**6.** Zusammensetzung nach einem der vorhergehenden Ansprüche, wobei

$A_1$ und/oder $A_2$ Phenyl-, Thienyl- oder Pyrazolylgruppen darstellt, die unabhängig voneinander durch einen oder mehrere Substituenten aus der Gruppe Fluor- oder Chloratome, Methyl-, Methoxy-, Trifluormethyl- oder Trifluormethoxygruppen substituiert sind;
$R_1$ Trifluormethyl, Methylthio oder Methyl bedeutet und $R_2$ ein Wasserstoffatom bedeutet;

oder

$R_1$ ein Wasserstoffatom bedeutet und $R_2$ ein Wasserstoff- oder Chloratom bedeutet;
$A_3$ Pyridyl oder Pyrazolyl darstellt und $A_4$ Pyridyl, Pyrazolyl, Phenyl oder Benzyl darstellt, die, falls beide Pyridyl oder Pyrazolyl bedeuten, gleich sein können; und die unsubstituiert oder unabhängig voneinander durch Halogenatome oder Nitro-, Cyan-, Alkyl-, Alkoxy-, Alkylthio-, Aryl- oder Halogenalkylgruppen, wobei der Alkylteil 1 bis 6 Kohlenstoffatome enthält, substituiert sind.

**7.** Zusammensetzung nach einem der vorhergehenden Ansprüche, wobei die Verbindungen der Gruppe (1) aus der Gruppe der Verbindungen der Formeln III und IV ausgewählt sind:

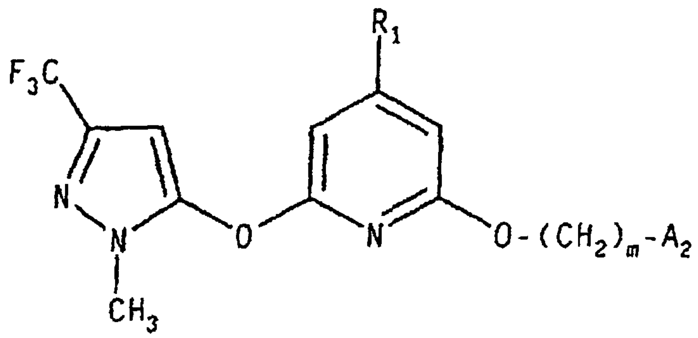

(III)

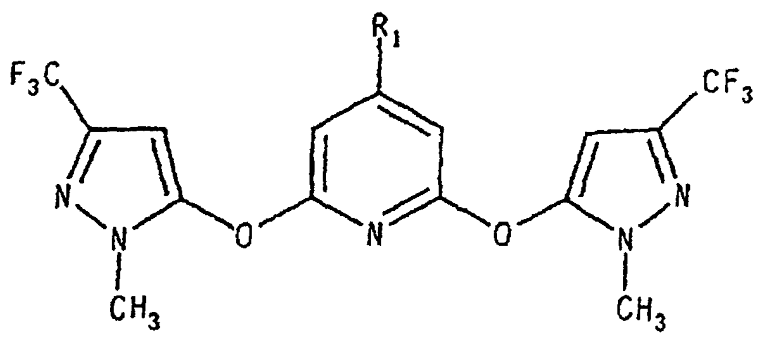

(IV)

worin $A_2$ eine Arylgruppe, die durch einen oder mehrere gleiche oder verschiedene Substituenten aus der Gruppe Halogenatome, $C_1$-$C_4$-Alkyl-, -Alkoxy-, -Halogenalkyl- oder -Halogenalkoxygruppen substituiert sein kann, $R_1$ ein Wasserstoffatom oder eine $C_1$-$C_4$-Alkyl-, -Alkoxy-, -Alkylthio- oder -Halogenalkylgruppe bedeutet und m 0, 1 oder 2 ist.

**8.** Zusammensetzung nach Anspruch 7, wobei in den Verbindungen der Formel III $R_1$ Methyl darstellt, m 1 ist und $A_2$ Phenyl oder 4-Fluorphenyl darstellt.

**9.** Zusammensetzung nach Anspruch 7, wobei $R_1$ in den Verbindungen der Formel IV ein Wasserstoffatom oder eine Methylgruppe darstellt.

**10.** Zusammensetzung nach einem der vorhergehenden Ansprüche mit einer Verbindung, die einer der Formeln A bis D entspricht:

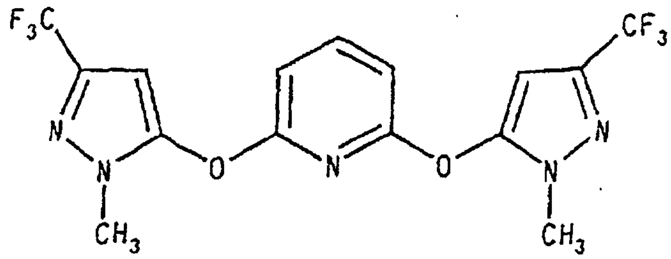

compound A

Verbindung A

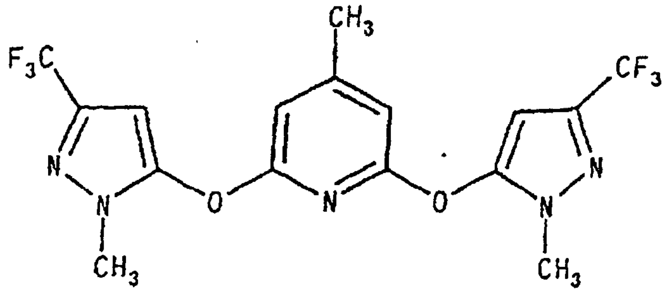

compound B

Verbindung B

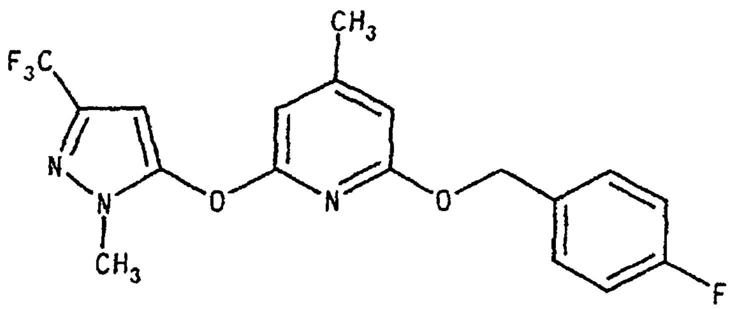

compound C

Verbindung C

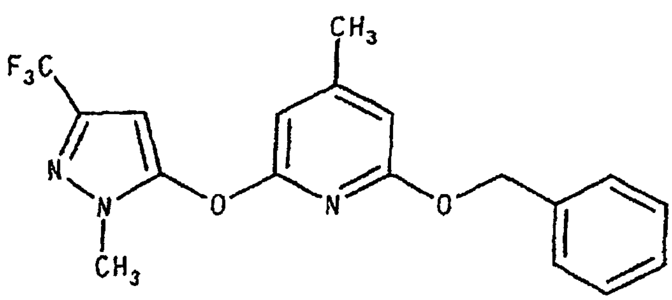

compound D

Verbindung D

**11.** Zusammensetzung nach einem der vorhergehenden Ansprüche, wobei das (Gewichts-)Verhältnis des 2,6-disubstituierten Pyridins zu der weiteren herbiziden Verbindung (2) 10:1 bis 1:200 beträgt.

**12.** Verfahren zur Bekämpfung von Unkrautwuchs an einem Ort, das das Ausbringen einer wiksamen Menge sowohl einer Verbindung aus der Gruppe (1) als auch einer Verbindung der Gruppe (2), wie in einem der verhergehenden Ansprüche definiert, auf diesen Ort, umfaßt.

**13.** Verfahren nach Anspruch 12, wobei die Verbindungen gemeinsam in einer einzigen Formulierung ausgebracht werden.

**14.** Verfahren nach Anspruch 12, wobei die Verbindungen in getrennten Formulierungen ausgebracht werden.

**15.** Verfahren zur Bekämpfung von Unkrautwüchs in Getreidekulturen, bei dem man eine Zusammensetzung nach einem der vorhergehenden Ansprüche in einer wirksamen Menge auf die Getreidekulturen ausbringt.

## Revendications

**1.** Composition herbicide comprenant un support et/ou un agent tensio-actif acceptables pour un herbicide et, comme ingrédient actif, un mélange de

(1) au moins une pyridine disubstituée en 2,6, choisie parmi les composés des formules générales I et II :

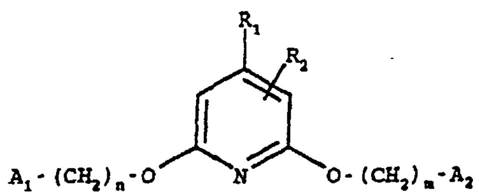

(I)

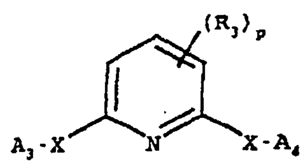

(II)

dans lesquelles

$A_1$ et $A_2$ représentent indépendamment un- groupe aryle, si m est 1, $A_2$ peut également représenter un groupe thiényle ; au moins l'un de $A_1$ et $A_2$ étant substitué par un ou plusieurs substituants identiques ou différents choisis parmi des atomes d'halogène, des groupes alkyle, des groupes alcoxy, des groupes halogénoalkyle et des groupes halogénoalcoxy ;
$R_1$ représente un atome d'hydrogène ou un groupe cyano ou un groupe alkyle, alcoxy, alkylthio ou halogénoalkyle ayant 1 à 4 atomes de carbone ;
$R_2$ représente un atome d'hydrogène ou d'halogène, à condition qu'au moins l'un de $R_1$ et $R_2$ représente un atome d'hydrogène ;
n et m représentent indépendamment 0 ou 1 ;
$A_3$ représente un groupe hétéroaromatique azoté penta- ou hexagonal facultativement substitué ;
$A_4$ représente un groupe hydrocarboné cyclique penta- ou hexagonal, alkyle, alcényle, alcynyle, aryle ou aralkyle facultativement substitué ou a indépendamment l'une des significations données pour $A_3$ ;
$R_3$ représente un atome d'halogène ou un groupe alkyle, halogénoalkyle, alcoxy, alkylthio ou dialkylamino, X représente un atome d'oxygène ou de soufre ; p représente 0, 1 ou 2,
et

(2) au moins un composé herbicide supplémentaire, qui est actif contre des mauvaises herbes latifoliées et/ou des graminées annuelles.

**2.** Composition herbicide selon la revendication 1, dans laquelle la pyridine disubstituée en 2,6 est un composé de formule générale I.

**3.** Composition herbicide selon la revendication 1, dans laquelle la pyridine disubstituée en 2,6 est un composé de formule générale II.

**4.** Composition herbicide selon l'une quelconque des revendications précédentes, dans laquelle ledit composé herbicide supplémentaire (2) est choisi parmi

a) un herbicide du type urée,
b) un herbicide du type triazine,

c) un herbicide du type hydroxybenzonitrile,
d) un herbicide du type acide aryloxyalcanoïque,
e) un herbicide du type dinitraniline,
f) un herbicide du type sulfonylurée,
g) un herbicide du type pyridazine,
h) un herbicide du type acide fluorène-carboxylique,
i) un herbicide du type acide pyridyloxyacétique,
j) un herbicide du type acide phénoxyphénoxypropionique,
k) un herbicide du type oxyacétamide.

**5.** Composition selon la revendication 4, dans laquelle ledit composé herbicide supplémentaire est choisi dans la classe formée par le chlortoluron, l'isoproturon, le linuron, le néburon, l'atrazine, la cyanazine, la simazine, le bromoxynil, l'ioxynil, le dichlorprop, MCPA, le mécoprop, la pendiméthaline et l'amidosulfuron, le pyridate, le flurénol, le fluroxypyr, le fénoxaprop.

**6.** Composition selon l'une quelconque des revendications précédentes, dans laquelle

| | |
|---|---|
| $A_1$ et/ou $A_2$ | sont des groupes phényle, thiényle ou pyrazolyle, indépendamment substitués par un ou plusieurs substituants choisis parmi des atomes de fluor ou de chlore, des groupes méthyle, méthoxy, trifluorométhyle ou trifluorométhoxy ; |
| $R_1$ | représente un groupe trifluorométhyle, méthylthio ou méthyle et $R_2$ est un atome d'hydrogène ; ou bien |
| $R_1$ | représente un atome d'hydrogène et $R_2$ est un atome d'hydrogène ou de chlore ; |
| $A_3$ | est un groupe pyridyle ou pyrazolyle et $A_4$ est un groupe pyridyle, pyrazolyle, phényle ou benzyle et peuvent être identiques si chacun d'eux représentent un groupe pyridyle ou pyrazolyle ; et ne sont pas substitués ou sont substitués indépendamment par des atomes d'halogène, des groupes nitro, cyano, alkyle, alcoxy, alkylthio, aryle ou halogénoalkyle dont le fragment alkyle contient 1 à 6 atomes de carbone. |

**7.** Composition selon l'une quelconque des revendications précédentes, dans laquelle les composés du groupe (1) sont choisis parmi les composés de formules III et IV :

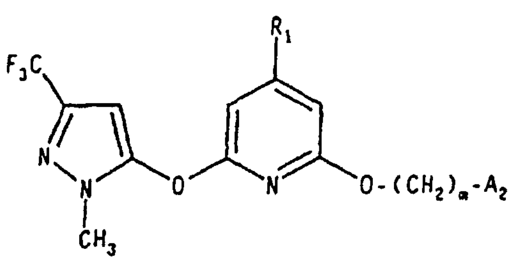

(III)

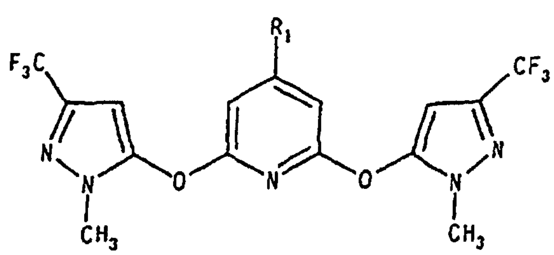

(IV)

où $A_2$ représente un groupe aryle qui peut être substitué par un ou plusieurs substituants identiques ou différents choisis parmi les atomes d'halogène, les groupes alkyle en $C_1$-$C_4$, alcoxy en $C_1$-$C_4$, halogénoalkyle en $C_1$-$C_4$, halogénoalcoxy en $C_1$-$C_4$, $R_1$ représente un atome d'hydrogène ou un groupe alkyle en $C_1$-$C_4$, alcoxy en $C_1$-$C_4$, alkylthio en $C_1$-$C_4$ ou halogénoalkyle en $C_1$-$C_4$, et m est 0, 1 ou 2.

**8.** Composition selon la revendication 7, dans laquelle, dans les composés de formule III, $R_1$ est un groupe méthyle, m est 1 et $A_2$ est un groupe phényle ou 4-fluorophényle.

**9.** Composition selon la revendication 7, dans laquelle, dans les composés de formule IV, $R_1$ est un atome d'hydrogène ou un groupe méthyle.

**10.** Composition selon l'une quelconque des revendications précédentes, contenant un composé représenté par l'une des formules A à D :

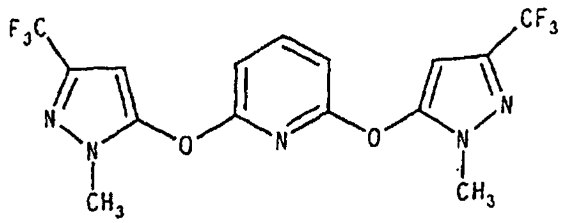

composé A

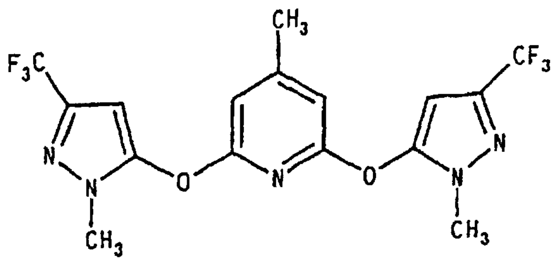

composé B

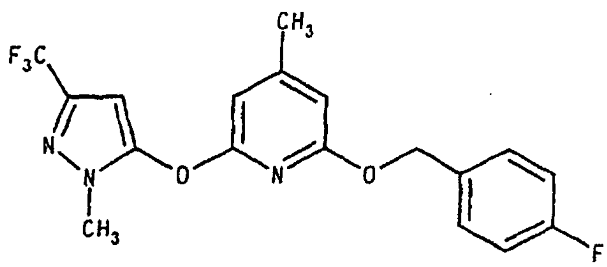

composé C

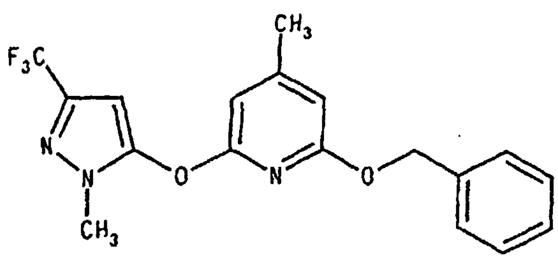

composé D

**11.** Composition selon l'une quelconque des revendications précédentes, dans laquelle le rapport (en poids) de la pyridine disubstituée en 2,6 au composé herbicide supplémentaire (2) est de 10:1 à 1:200.

**12.** Procédé pour combattre la croissance de mauvaises herbes sur un site, qui comprend l'application au site d'une quantité efficace d'un composé du groupe (1) et d'un composé du groupe (2) tels que définis dans l'une quelconque des revendications précédentes.

**13.** Procédé selon la revendication 12, dans lequel lesdits composés sont appliqués ensemble dans une seule formulation.

**14.** Procédé selon la revendication 12, dans lequel lesdits composés sont appliqués dans des formulations séparées.

**15.** Procédé pour combattre la croissance de mauvaises herbes dans des cultures céréalières, comprenant l'application à celles-ci d'une quantité efficace d'une composition selon l'une quelconque des revendications précédentes.